# EUROPEAN PATENT SPECIFICATION

(11) **EP 2 338 728 B1**
(45) Date of publication and mention of the grant of the patent: **25.07.2012**
(21) Application number: 10194815.6
(22) Date of filing: 14.12.2010
(51) Int. Cl.: B60Q 1/076, B60Q 1/10, F21V 17/00

(54) **Vehicle headlamp**
Fahrzeugscheinwerfer
Phare de véhicule

(30) Priority: 25.12.2009 JP 2009295222; 08.07.2010 JP 2010155627
(43) Date of publication of application: 29.06.2011
(73) Proprietor: Koito Manufacturing Co., Ltd., Tokyo 108-8711 (JP)
(72) Inventor: Shibata, Hiroki, Shizuoka-shi Shizuoka (JP); Oishi, Kazutami, Shizuoka-shi Shizuoka (JP)
(74) Representative: Grünecker, Kinkeldey, Stockmair & Schwanhäusser

(56) References cited:
- EP-A1- 1 772 311
- EP-A2- 0 275 095
- EP-A2- 1 270 321
- DE-A1-102004 061 484
- US-B1- 6 220 735
- US-B1- 6 227 690

## Description

### BACKGROUND OF THE INVENTION

### <FIELD OF THE INVENTION>

The present invention relates to a vehicle headlamp in which a size is reduced and a maintenance-ability is improved by detachably mounting a leveling actuator on a frame disposed in a lamp chamber.

### <RELATED ART>

There is a vehicle headlamp in which a lamp unit having a light source is disposed in an interior of a lamp casing defined by a cover and a lamp housing.

There is a lamp unit in which an optical axis adjusting mechanism enables an aiming adjustment, which is an initial adjustment of a light irradiation direction and a leveling adjustment which corrects an inclination of the light irradiation direction, which is caused by a weight of a load loaded on a vehicle (refer to JP-A-2004-227933, for example).

In a vehicle headlamp described in JP-A-2004-227933, a lamp unit is supported on a frame having an opening opened in a front-rear direction, and the frame is supported on a lamp housing via two adjustment shafts each having a threaded portion and one fulcrum shaft (a driving shaft). The fulcrum shaft and the two adjustment shafts are connected to the lamp housing at their rear end portions. The fulcrum shaft is connected to a lower end portion of the frame at its front end portion, and the two adjustment shafts are connected to an upper end portion of the frame at their front end portions so as to be spaced apart in a right-left direction.

The fulcrum shaft is a drive shaft, which is provided on a leveling actuator. The fulcrum shaft projects forward from a drive control unit of the leveling actuator. In the leveling actuator, the drive control unit is mounted on an external surface of the lamp housing.

In the vehicle headlamp, when the adjustment shafts are rotated so that the threaded shafts are screwed into or out of the frame, the frame and the lamp unit are tilted together in a horizontal plane or a vertical plane on the fulcrum shaft as a fulcrum to effect a horizontal aiming adjustment or a vertical aiming adjustment.

On the other hand, when the drive shaft (the fulcrum shaft) is moved in the front-rear direction by a driving force of the drive control unit of the leveling actuator, the frame and the lamp unit are tilted together in the vertical plane on the two adjustment shafts as fulcrums to effect a leveling adjustment.

In the vehicle headlamp described in JP-A-2004-227933, however, since the drive control unit of the leveling actuator is mounted on the external surface of the lamp housing, the drive control unit projects rearwards from the lamp housing, and a space to dispose the drive control unit is accordingly needed, thus preventing the reduction in size of the vehicle headlamp.

Should a failure be caused in the leveling actuator, it will be necessary to perform two pieces of repairing work inside and outside the lamp housing including work to detach the drive control unit from the lamp housing outside the lamp housing and work to cancel the connection of the drive shaft with the frame inside the lamp housing, so that the leveling actuator can be replaced or repaired.

Consequently, in the vehicle headlamp of JP-A-2004-227933, the workability at the time of failure of the leveling actuator is not good, causing a problem that the maintainability is low. A vehicle headlamp according to the preamble of claim 1 is disclosed in US 6,220,735 B1.

### SUMMARY OF THE INVENTION

An embodiment of the invention provide a vehicle headlamp in which size is reduced and a maintainability is improved.

In accordance with the embodiment of the invention, a vehicle headlamp according to claim 1 is provided.

In the above structure, a leveling adjustment is performed by the leveling actuator which is mounted on the frame disposed in the lamp chamber.

Other aspects and advantages of the invention will be apparent from the following description and the appended claims.

### BRIEF DESCRIPTION OF THE DRAWINGS

Fig. 1 is a schematic vertical sectional view showing a vehicle headlamp of a first exemplary embodiment, which is not part of the invention.
Fig. 2 is an exploded perspective view showing an interior configuration of the vehicle headlamp.
Fig. 3 is a perspective view showing an interior configuration of the vehicle headlamp.
Fig. 4 is an enlarged perspective view showing load holding portions and the like.
Fig. 5 is an exploded perspective view showing an interior configuration of a vehicle headlamp of an exemplary embodiment of the invention.
Fig. 6 is an enlarged sectional view showing a condition in which a fulcrum connecting portion is supported on a support portion of a frame in the exemplary embodiment.

### DETAILED DESCRIPTION OF THE EXEMPLARY EMBODIMENT

Exemplary embodiment of the invention will be described by reference to the accompanying drawings.

### <First Exemplary Embodiment, which is not part of the invention>

A vehicle headlamp 1 is to be mounted at each of right and left end portions of a front end of a vehicle body.

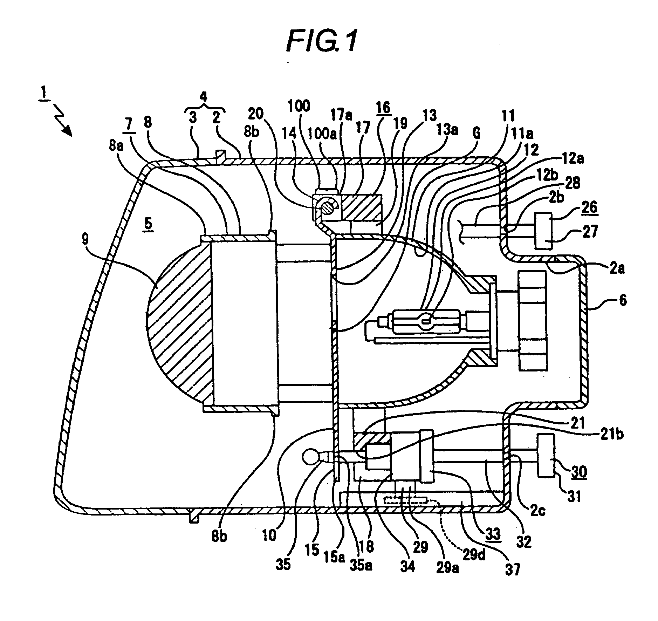

As is shown in Fig. 1, the vehicle headlamp 1 includes a lamp housing 2 having a recess portion, which is opened to the front and a cover 3 which closes the opening in the lamp housing 2. A lamp casing 4 is made up of the lamp housing 2 and the cover 3, and an interior space of the lamp casing 4 is formed as a lamp chamber 5.

A mounting hole 2a is formed in a rear end portion of the lamp housing. This mounting hole 2a penetrates through the rear end portion in a front-rear direction. A back cover 6 is attached to the mounting hole 2a.

Shaft insertion holes 2b, 2c are formed in the lamp housing 2 in positions lying closer to a rear end thereof so as to be spaced apart in a vertical direction. The shaft insertion holes 2b, 2c penetrate through the lamp housing 2 in the front-rear direction.

A lamp unit 7 is disposed in the lamp chamber 5 (refer to Figs. 1 to 3). The lamp unit 7 has a lens holder 8, a projection lens 9, which is mounted at a front end portion of the lens holder 8, a shade 10, which is mounted at a rear end portion of the lens holder 8, a reflector 11, which is mounted on the shade 10 at a front end portion thereof, and a light source 12, which is mounted at a rear end portion of the reflector 11.

The lens holder 8 includes a holding portion 8a, which is formed into a substantially cylindrical shape having an opening passing therethrough in the front-rear direction and mounting legs 8b, 8b, ... which project rearwards from the holding portion 8a. The mounting legs 8b, 8b, ... are provided in a circumferential direction so as to be spaced apart from one another.

The projection lens 9 has a front surface, which is convex and a rear surface, which is flat and oriented rearwards. The projection lens 9 has a function to project light emitted from the light source 12 to the front while inverting an image on a focal plane, which includes a rear focal point thereof.

The shade 10 includes a shielding plate portion 13, which is oriented in a vertical direction, a fulcrum connecting portion 14, which projects upwards from an upper end of the shielding plate portion 13 and a shaft connecting portion 15, which projects downwards from a lower end of the shielding plate portion 13. These constituent parts are integrated into the shade 10.

A light transmission hole 13a is formed in the shielding plate portion 13. This light transmission hole 13a penetrates through the shielding plate portion 13 in the front-rear direction. A portion of light emitted from the light source 12 is cut off by the shielding plate portion 13, and the other portion of the light so emitted passes through the light transmission hole 13a to be irradiated forward.

The fulcrum connecting portion 14 is formed by bending a plate-like member into a predetermined shape and is actually formed into a semi-cylindrical shape of which an upper end portion is opened downwards.

The shaft connecting portion 15 is formed into a flat plate-like shape, which is oriented in the front-rear direction. The shaft connecting portion 15 has a connecting cutout 15a which is opened downwards.

In the shade 10, as has been described above, the fulcrum connecting portion 14 and the shaft connecting portion 15 are formed integrally with the shielding plate portion 13. In addition, the fulcrum connecting portion is formed by bending the plate-like member into the predetermined shape. Consequently, the fulcrum connecting portion 14 can easily be formed, thereby making it possible to realize a reduction in fabrication costs.

Since the fulcrum connecting portion 14 and the shaft connecting portion 15 are formed integrally with the shielding plate portion 13, the number of constituent parts can be reduced accordingly.

The fulcrum connecting portion 14 and the shaft connecting portion 15 are situated in upper and lower positions, respectively. A center of gravity G of the lamp unit 7 is positioned on the shielding plate portion 13 in a position lying on an axis, which connects the fulcrum connecting portion 14 with the shaft connecting portion 15 or in the vicinity of the axis (refer to Fig. 1).

The mounting leg portions 8b, 8b, ... of the lens holder 8 are attached to an outer circumferential portion of the shielding plate portion 13 at their rear end portions with screws or the like.

An inner surface of the reflector 11 is formed as a reflecting surface 11 a, which is formed into a substantially ellipsoidal surface except a portion thereof. The reflecting surface 11 a is formed so that a first focal point coincides with a light emitting portion, which will be described later, of the light source 12 and a second focal point thereof coincides with the rear focal point of the projection lens 9.

The reflector 11 is attached to the outer circumferential portion of the shielding plate portion 13 at its front end portion with screws or the like.

The light source 12 is a discharge bulb, for example. Light is emitted from a light emitting portion 12b, which is provided in an interior of an outer tube 12a. The Light emitted from the light emitting portion 12b travels to the front or is reflected on the reflecting surface 11a so as to be collected on to the focal plane of the projection lens 9, which includes the rear focal point thereof to thereby be projected to the front by the projection lens 9 as illumination light.

A frame 16 is disposed in the lamp chamber 5. The frame 16 is supported in the lamp housing 2 so as to be tilted by an optical axis adjustment mechanism, which will be described later (refer to Figs. 1 to 3).

The frame 16 is formed into a substantially rectangular closed-shape frame and is formed by an upper portion 17, a lower portion 18 and side portions 19, 19.

Projecting mount portions 17a, 17a are provided on the upper portion 17 so as to be spaced apart from each other in a right-left direction. These projecting mount portions 17a, 17a project to the front. A round shaft-like support portion 20 extends in the right-left direction and is mounted on the projecting mount portions 17a, 17a at end portions thereof. The support portion 20 may have any shape which has a circumferential surface in part. For example, the support portion 20 may have a semicircular or arc-like shape in section which is upwardly convex.

A transversely central portion of the lower portion 18 is provided as a mounting portion 21 which projects further upwards than the other portions. Threaded holes 21a, 21a are formed in the mounting portion 21, and these screw holes 21a, 21a are opened in a rear surface of the mounting portion 21. An inserting cutout 21 b is formed in the mounting portion 21, and this inserting cutout 21 b is opened downwards.

A fitting hole 18a is formed in a left end portion of the lower portion 18. The fitting hole 18a penetrates through the lower portion 18 in the front-rear direction. Supported projecting portions 22, 22 are provided on the lower portion 18 so as to project sideways from left and right end faces thereof. The supported projecting portions 22, 22 are each formed into a semi-cylindrical shape having an arc-like section so as to be opened to the front.

By forming the supported projecting portions 22 into the semi-cylindrical shape having the arc-like section, removing the frame 16 from a mold is facilitated when molding the frame 16, thereby making it possible to realize an improvement in moldability.

A connecting hole 19a is formed in an upper end portion of one of the side portions 19, and this connecting hole 19a penetrates through the side portion 19 in the front-rear direction.

The lamp unit 7 is supported at the support portion 20 of the frame 16 so as to rotate (tilt) in a vertical plane. The fulcrum connecting portion 14 provided on the shade 10 is fitted on the support portion 20 to thereby be supported thereon, whereby the lamp unit 7 is able to rotate on the support portion 20 as a fulcrum relative to the frame 16.

In such a state that the lamp unit 17 is supported on the frame 16, fastening screws 100, 100 are screwed into the corresponding projecting mount portions 17a, 17a at the upper portion 17 from thereabove. In such a state that the fastening screws 100, 100 are joined into the corresponding projecting mount portions 17a, 17a, respective portions of head portions 100a, 100a of the fastening screws 100, 100 are positioned directly above left and right end portions of the fulcrum connecting portion 14, whereby the fulcrum connecting portion 14 is prevented from being disengaged from the support portion 20 by the fastening screws 100, 100.

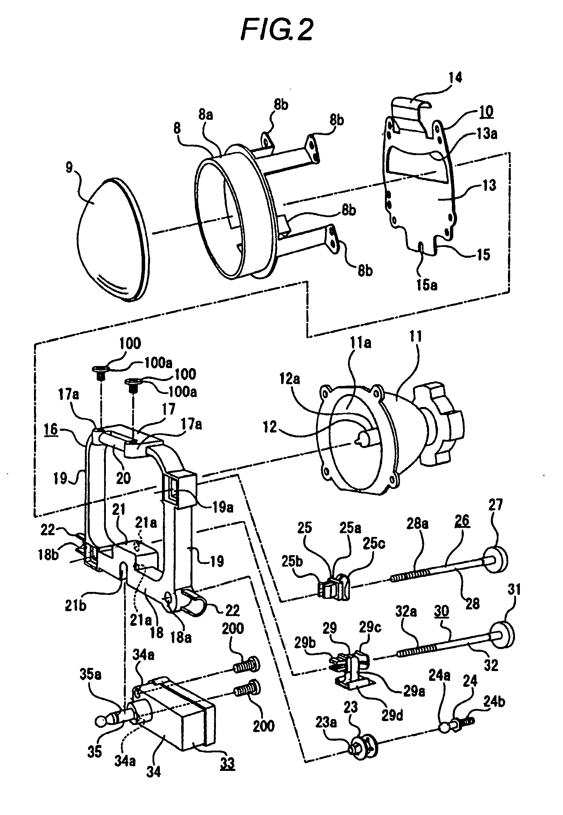

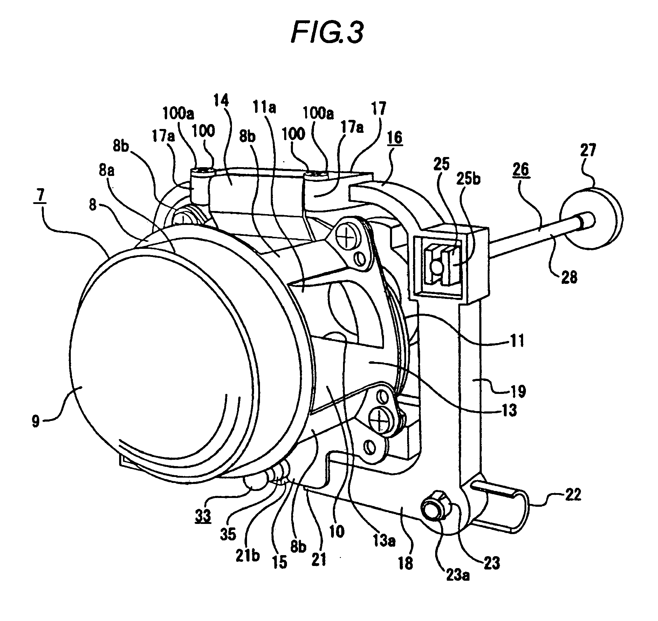

A pivot 24 is connected into the fitting hole 18a in the lower portion 18 of the frame 16 via a bearing member 23 (refer to Figs. 2 and 3). The pivot 24 constitutes a constituent element of the optical axis adjustment mechanism for effecting an aiming adjustment together with a first operation shaft and a second operation shaft, which will be described later.

A fitting portion 23a is provided on the bearing member 23. This fitting portion 23a is adapted to be fitted in the fitting hole 18a so as to be fixed therein. A bearing hole, not shown, is formed in the bearing member 23. This bearing hole is opened to the rear and is formed into a substantially spherical surface.

The pivot 24 has a spherical portion 24a at a front end portion and a threaded joining portion 24b at a rear end portion thereof. The pivot 24 is connected to the frame 16 via the bearing member 23 by the spherical portion 24a being fitted rotatably in the bearing hole in the bearing member 23.

As has been described above, the fitting hole 18a in the frame 16 constitutes the portion where the pivot 24 is connected to the frame 16 via the bearing member 23 and functions as an aiming fulcrum portion when an aiming adjustment is effected.

A first operating shaft 26 is connected to the connecting hole 19a in the side portion 19 of the frame via a first connecting member 25.

The first connecting member 25 includes a base portion 25a, a connecting projecting portion 25b, which projects to the front from a front surface of the base portion 25a and a bearing recess portion 25c, which projects to the rear from a rear surface of the base portion 25a. A threaded hole, not shown, is formed in an interior of the bearing recess portion 25c so as to penetrate through the recess portion 25c in the front-rear direction. The first connecting member 25 is fixed in place in the connecting hole 19a in the frame 16 by the connecting projecting portion 25b being fitted in the connecting hole 19a.

The first operating shaft 26 includes a rotating operating portion 27 and a shaft portion 28, which projects to the front from the rotating operating portion 27. A front end portion of the shaft portion 28 is provided as a threaded shaft portion 28a. The threaded shaft portion 28a of the first operating shaft 26 is inserted to be threaded into the threaded hole from the bearing recess portion 25c of the first connecting member 25, whereby the first operating shaft 26 is connected to the frame via the first connecting member 25.

As has been described above, the connecting hole 19a in the frame 16 is the portion where the first operating shaft 26 is connected to the frame 16 via the first connecting member 25 and functions as an aiming working portion when an aiming adjustment is effected.

The first operating shaft 26 is inserted into the upper shaft insertion hole 2b formed in the lamp housing 2 at the shaft portion 28 and is supported on the lamp housing 2 so as to rotate in directions about an axis thereof but not to move in an axial direction thereof (refer to Fig. 1).

A second operating shaft 30 is connected into a connecting hole 18b in the lower portion 18 of the frame 16 via a second connecting member 29 (refer to Figs. 2 and 3).

The second connecting member 29 includes a base portion 29a, a connecting projecting portion 29b, which projects to the front from a front surface of an upper half portion of the base portion 29a, a bearing recess portion 29c, which projects to the rear from a rear surface of the upper half portion of the base portion 29 and a supported surface portion 29d connected to a lower end of the second connecting member 29 and oriented in the vertical direction. A threaded hole is formed in the second connecting member 29 in a position, which extends from the connecting projecting portion 29b to the bearing recess portion 29c. The threaded hole penetrates through the second connecting member 29 over the position in the front-rear direction. The connecting projecting portion 29b of the second connecting member 29 is fitted in the connecting hole 18b in the frame 16 to thereby be fixed therein.

The second operating shaft 30 includes a rotating operating portion 31 and a shaft portion 32, which projects to the front from the rotating operating portion 31. A front end portion of the shaft portion 32 is provided as a threaded shaft portion 32a. The second operating shaft 30 is connected to the frame 16 via the second connecting member 29 by the threaded shaft portion 32a being inserted into the threaded hole from the bearing recess portion 29c of the second connecting member 29 for threading connection.

As has been described above, the connecting hole 18b in the frame 16 constitutes the portion where the second operating shaft 30 is connected to the frame 16 via the second connecting member 29 and functions as an aiming working portion when an aiming adjustment is effected.

The second operating shaft 30 is supported on the lamp housing 2 so as to rotate in directions about an axis thereof but not to move in an axial direction thereof by the shaft portion 32 being inserted into a lower shaft insertion hole 2c formed in the lamp housing 2 (refer to Fig. 1).

A leveling actuator 33 is mounted on the lower portion 18 of the frame with screws (refer to Figs. 2 and 3).

The leveling actuator 33 includes a drive control unit 34 and a drive shaft 35, which projects to the front from the drive control unit 34. The drive shaft 35 is moved in the front-rear direction by a driving force of the drive control unit 34.

Screw insertion holes 34a, 34a are formed in the drive control unit 34. These screw insertion holes 34a, 34a penetrate through the drive control unit 34 in the front-rear direction.

A connecting groove 35a is formed on the drive shaft 35 in a position lying closer to a front end thereof so as to extend in a circumferential direction.

The leveling actuator 33 is mounted on the lower portion 18 of the frame 16 by mounting screws 200, 200 which are inserted, respectively, through the screw insertion holes 34a, 34a in the drive control unit 34 being screwed into the threaded holes 21 a, 21 a. Consequently, the leveling actuator 33 can be detached from the frame 16 by untightening the mounting screws 200, 200 and removing them from the screw insertion holes 34a, 34a.

The leveling actuator 33 is connected to the lamp unit 7 by the drive shaft 35 being inserted into the inserting cutout 21 b formed in the mounting portion 21 of the frame 16 from therebelow and the shaft connecting portion 15 of the shade 10 being fitted in the connecting groove 35a.

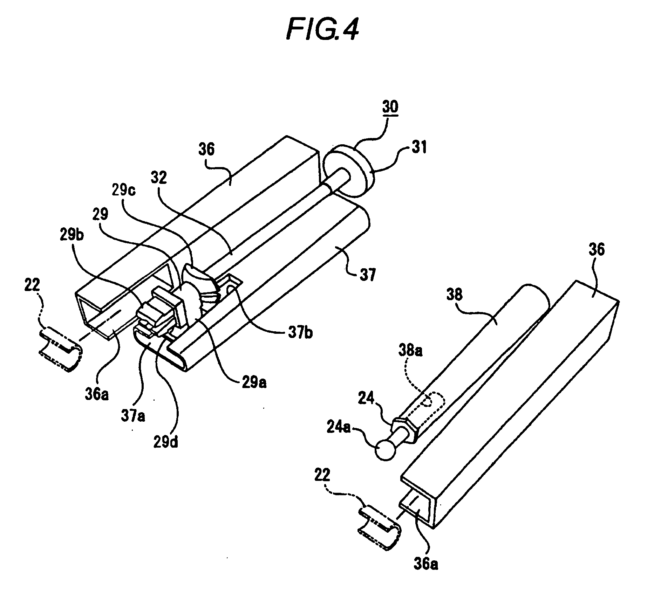

Load holding portions 36, 36 are provided on an inner surface of a lower surface portion of the lamp housing 2 so as to be spaced apart from each other in the right-left direction. These load holding portions 36, 36 are provided integrally on the lamp housing 2, for example (refer to Figs. 1 and 4). The load holding portions 36, 36 are each formed into a shape extending in the front-rear direction and each have a sliding support portion 36a, which is opened to the front and sideways (inwards).

The supported projecting portions 22, 22 of the frame 16 are inserted into the corresponding sliding support portions 36a, 36a of the load holding portions 36, 36 so as to be supported slidably therein.

The sliding support portions 36a, 36a are formed only at front end sides of the respective load holding portions 36, 36. The sliding support portions 36a, 36a extend a minimum length, which constitutes a traveling stroke for the supported projecting portions 22, 22 when the frame 16 is moved substantially in the front-rear direction. A draft angle of a mold for molding the load holding portions 36, 36 can be made small by forming the sliding support portions 36a, 36a to the required minimum length, thereby making it possible to improve molding accuracy.

A load bearing portion 37 is provided between the load holding portions 36, 36 on the inner surface of the lower surface portion of the lamp housing 2. The load bearing portion 37 is provided integrally on the lamp housing 2, for example. The load bearing portion 37 is formed into a shape, which extends in the front-rear direction and has a supporting groove portion 37a, which is opened to the front. A slit 37b is formed in an upper surface portion of the load bearing portion 37. The slit 37b is opened to a front end of the load bearing portion 37 and extends in the front-rear direction so as to communicate with the supporting groove portion 37a.

The second connecting member 29 is slidably supported in the supporting groove portion 37a of the load bearing portion 37. A lower end portion of the base portion 29a of the second connecting member 29 is inserted through the slit 37b so that the supported surface portion 29d is supported in the supporting groove 37a.

The supporting groove portion 37a is formed only at a front end side of the load bearing portion 37. The supporting groove portion 37a is formed so as to extend a minimum length, which constitutes a traveling stroke of the second connecting portion 29, when the frame 16 is moved substantially in the front-rear direction. By forming the supporting groove portion 37a to the required minimum length, a draft angle of a mold for molding the load bearing portion 37 can be made small, thereby making it possible to realize an improvement in molding accuracy.

As has been described above, since the frame 16 and the second connecting member 29 connected to the frame 16 are supported, respectively, by the load holding portions 36, 36 and the load bearing portion 37, which are provided on the lamp housing 2, the loads of the frame 16 and the lamp unit 7 are borne by the lamp housing 2. Consequently, the stabilization of the state in which the frame 16 and the lamp unit 7 are disposed in the lamp chamber 5 can be realized, whereby the frame 16 and the lamp unit 7 are made difficult to be affected by vibrations generated while the vehicle is running, thereby making it possible to realize an improvement in resistance to vibrations.

In the lamp unit 7, as has been described above, since the center of gravity G of the lamp unit 7 is positioned on the axis which connects the fulcrum connecting portion 14 and the shaft connecting portion 15 or in the vicinity thereof, it is possible to realize a further improvement in resistance to vibrations.

A holding projecting portion 38 is provided in the interior of the lamp housing 2 in a position lying closer to a lower end thereof. The holding projecting portion 38 is provided integrally on the lamp housing 2, for example. A connecting threaded hole 38a is formed in the holding projecting portion 38 so as to be opened to the front.

The threaded joining portion 24b of the pivot 24 is threaded into the connecting threaded hole 38a so that the pivot 24 is connected to the holding projecting portion 38.

In the vehicle headlamp 1 described heretofore, when the rotating operating portion 27 of the first operating shaft 26 is operated to rotate so that the threaded shaft portion 28a is screwed into or out of the first connecting member 25, the lamp unit 7 and the frame 16 are tilted together in the vertical plane on an axis, which connects the pivot 24 and the second connecting member 29 as a fulcrum. By the lamp unit 7 being so tilted, the irradiation direction of light emitted from the light source 12 and irradiated forward via the projection lens 9 is changed, whereby a so-called vertical aiming adjustment is effected. This vertical aiming adjustment is referred to as a vertical optical axis adjustment. As this occurs, the bearing member 23 rotates on the spherical portion 24a of the pivot 24.

When the rotating operating portion 31 of the second operating shaft 30 is operated to rotate so that the threaded shaft portion 32a is screwed into or out of the second connecting member 29, the lamp unit 7 and the frame 16 are tilted together in the horizontal plane on an axis, which connects the pivot 24 and the first connecting member 25 as a fulcrum. By the lamp unit 7 being so tilted, the irradiation direction of light emitted from the light source 12 and irradiated forward via the projection lens 9 is changed, whereby a so-called horizontal aiming adjustment is effected. This horizontal aiming adjustment is referred to as a horizontal optical axis adjustment. As this occurs, the bearing member 23 rotates on the spherical portion 24a of the pivot 24.

On the other hand, when the drive shaft 35 is moved in the front-rear direction by the driving force of the drive control unit 34 in the leveling actuator 33, the lamp unit 7 is tilted in the vertical plane on the support portion 20 of the frame 16 as a fulcrum. By the lamp unit 7 being so tilted, the irradiation direction of light emitted from the light source 12 and irradiated forward via the projection lens 9 is changed, whereby a so-called leveling adjustment is effected in which the direction of the optical axis, which changes depending upon the weight of a load loaded on the vehicle, is compensated for.

Thus, as has been described heretofore, in the vehicle headlamp 1, the leveling actuator 33 is mounted on the frame 16 in the interior of the lamp housing 2.

Consequently, since the leveling actuator 33 is not present on the external side of the lamp housing 2, a reduction in size of the vehicle headlamp 1 can be realized.

Since the leveling actuator 33 is detachably mounted on the frame 16, should the leveling actuator 33 fail in any way, the leveling actuator 33 only has to be detached from the frame 16 only in the interior of the lamp housing 2 so as to cancel the connection of the drive shaft 35 with the lamp unit 7, thereby maintainability is improved.

Since the support portion 20 having the circumferential surface is provided at the upper end portion of the frame 16 so that the fulcrum connecting portion 14 of the lamp unit 7 is supported slidably on the support portion 20, the lamp unit 7 can be supported on the frame 16 by hanging the lamp unit 7 on the frame 16, thereby making it possible to realize an improvement in workability in assembling the lamp unit 7 on to the frame 16.

### <An Exemplary Embodiment>

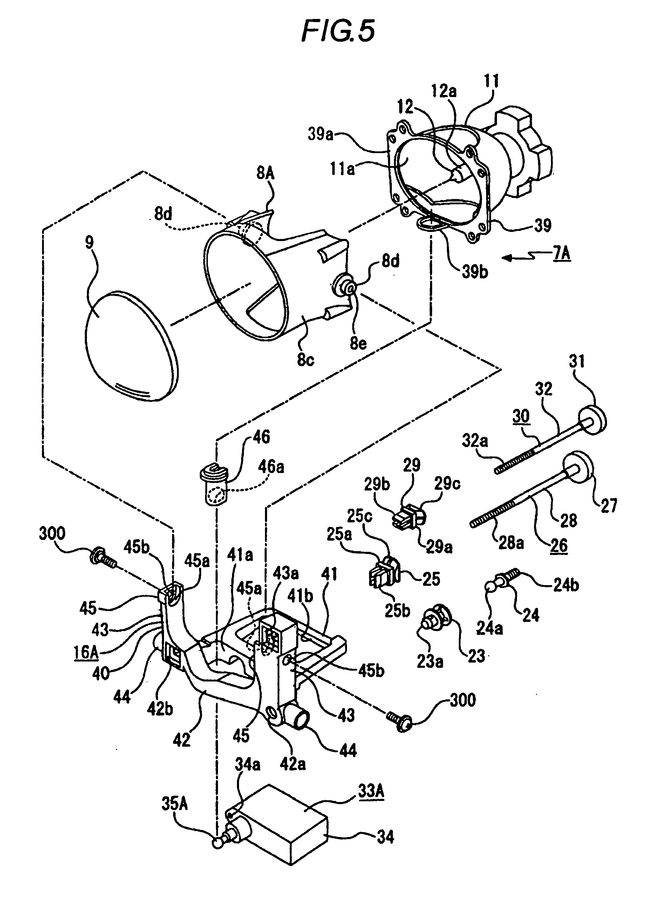

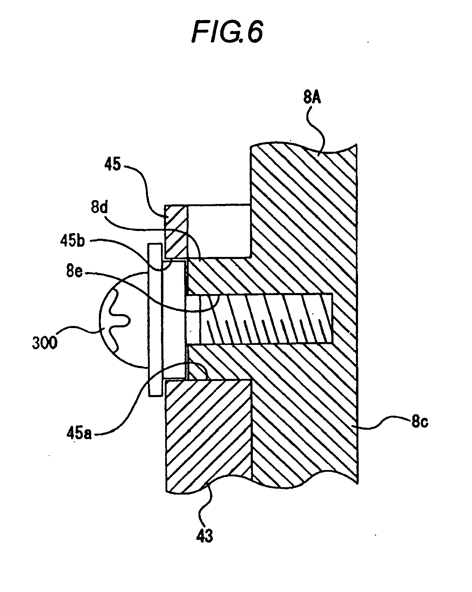

Although the vehicle headlamp 1 of the first exemplary embodiment, which is not part of the invention, is provided with the rectangular closed-shape frame 16 having the opening opened in the front-rear direction, the vehicle headlamp of the invention is not limited to configurations having such frame. A modified example is described as an exemplary embodiment referring to Figs. 5 and 6.

The vehicle headlamp of the exemplary embodiment differs from the vehicle headlamp 1 of the first exemplary embodiment, which is not part of the invention, only in that configurations of the frame and the lamp unit are different and that the drive shaft of the leveling actuator is connected to a connecting member attached to the lamp unit in the exemplary embodiment. Accordingly, in the below description, only parts different from the vehicle headlamp 1 of the first exemplary embodiment, which is not part of the invention, are described in detail. Regarding duplicate parts, the same reference numerals with the parts of the vehicle headlamp 1 of the first exemplary embodiment are added to such duplicate parts, and detailed descriptions of the duplicate parts are omitted.

In the lamp chamber 5 of the vehicle headlamp of the exemplary embodiment, a lamp unit 7A is disposed, as shown in Fig. 5. The lamp unit 7A includes a lens holder 8A, a projection lens 9 attached to a front end portion of the lens holder 8A, a coupling member 39 to which the lens holder 8A is attached, a reflector 11 I having a front end portion attached to the coupling member 39, and a light source 12 attached to a rear end portion of the reflector 11.

The lens holder 8A is configured by a holding portion 8c penetrating in the front-rear direction and having a cylindrical shape, and fulcrum connecting parts 8d, 8d (as a fulcrum connecting portion) respectively protruding sideward from outer surfaces of both right and left sides of the holding portion 8c. Each of the fulcrum connecting parts 8d, 8d has a cylindrical shape, and has a center hole as a screw hole 8e having a spiral groove.

The coupling member 39 is configured by an annularly shaped coupling portion 39a and an attaching portion 39b protruding in a front side from a lower end portion of the coupling portion 39a.

The rear end portion of the lens holder 8A and the front end portion of the reflector 11 are attached to the coupling portion 39a of the coupling member 39 by screw fitting or the like.

A frame 16A is disposed in the lamp chamber 5. The frame 16A is supported to the lamp housing 2 so as to be tiltable by an optical axis adjusting mechanism.

The frame 16A is configured by integrally forming a connecting protrusion 40 having an upward opened U-shape and a base protrusion 41 protruding in the rear side from a lower end portion of the connecting protrusion 40.

The connecting protrusion 40 includes a lower portion 42 extending in the right-left direction and side portions 43, 43 respectively protruding in the upper side from both right and left ends of the lower portion 42.

A fitting hole 42a penetrating in the front-rear direction is formed in a left end portion of the lower portion 42. A coupling hole 42b penetrating in the front-rear direction is formed in a right end portion of the lower portion 42. Supported projecting portions 44, 44 are respectively projecting sideward from both right and left end surfaces of the lower portion 42. The supported projecting portions 44, 44 are formed into cylindrical shapes.

A coupling hole 43a penetrating in the front-rear direction is formed in an upper end portion of one of the side portions 43.

An upper side part of one of the side portions 43 and an upper end portion of the other of the side portions 43 respectively act as support portions 45, 45. Support grooves 45a, 45a, each respectively opening in inner sides and the upper side, are formed in the support portions 45, 45. As shown in Fig. 6, screw holes 45b, 45b respectively penetrating in the right-left direction are formed in the support portions 45, 45.

The supported projecting portions 44, 44 are slidably supported on respective sliding support portions 36a, 36a of load holding portions 36, 36.

As shown in Fig. 5, an inserting hole 41a and a positioning hole 41b respectively penetrating in the up-down direction are formed in the base protrusion portion 41 so as to be apart in the front-rear direction from each other.

An upper end portion of a connecting member 46 is attached to the attaching portion 39b of the coupling member 39. A connecting recess 46a opening in the rear side is formed in the connecting member 46. The connecting member 46 is positioned by being inserted into the inserting hole 41 a of the base protrusion portion 41 of the frame 16A from the upper side.

A pivot shaft 24 is connected to the fitting hole 42a of the lower portion 42 of the frame 16A through a bearing member 23. A first operating shaft 26 is connected to the coupling hole 43a of the side portion 43 through a first connecting portion 25. A second operating shaft 30 is connected to the coupling hole 42b of the lower portion 42 through a second connecting member 29.

A leveling actuator 33A is attached to the base protrusion portion 41 of the frame 16A.

The leveling actuator 33A is configured by a drive control unit 34 and a drive shaft 35A protruding in the front side from the drive control unit 34. The drive shaft 35A moves in the front-rear direction by a drive force of the drive control unit 34.

The drive control unit 34 of the leveling actuator 33A is fixed to the base protrusion portion 41 of the frame 16A by screw fastening. The drive control unit 34 is disposed in the positioning hole 41 b of the base protrusion portion 41. The drive shaft 35A is connected to the connecting member 46 by being inserted into the connecting recess 46a.

The lamp unit 7A is supported to the frame 16A so as to be rotatable (tiltable) in the vertical plane, as shown in Figs 5 and 6.

The lamp unit 7A is supported on the frame 16A by inserting the fulcrum connecting parts 8d, 8d of the lens holder 8A into the support grooves 45a, 45a of the support portions 45, 45 from the upper side, and by fastening screw members 300, 300 penetrated through the screw holes 45b, 45b to the screw holes 8e, 8e. In a condition where the screw members 300, 300 are fastened to the screw holes 8e, 8e, as shown in Fig. 6, small gaps are respectively formed between axial end surfaces of the fulcrum connecting parts 8d, 8d and inner surfaces of the support portions 45, 45, and the lamp unit 7A is supported on the frame 16A so as to be rotatable around the fulcrum connecting parts 8d, 8d.

When the rotating operating portion 27 of the first operating shaft 26 is operated to rotate so that the threaded shaft portion 28a is screwed into or out of the first connecting member 25, the lamp unit 7A and the frame 16A are tilted together in the vertical plane on an axis which connects the pivot 24 and the second connecting member 29 as a fulcrum, whereby a vertical aiming adjustment is effected.

When the rotating operating portion 31 of the second operating shaft 30 is operated to rotate so that the threaded shaft portion 32a is screwed into or out of the second connecting member 29, the lamp unit 7A and the frame 16A are tilted together in the horizontal plane on an axis, which connects the pivot 24 and the first connecting member 25 as a fulcrum, whereby a horizontal aiming adjustment is effected.

On the other hand, when the drive shaft 35A is moved in the front-rear direction by the driving force of the drive control unit 34 in the leveling actuator 33A, the lamp unit 7A is tilted in the vertical plane on the fulcrum connecting parts 8d, 8d respectively supported on the support portions 45, 45 of the frame 16A as a fulcrum. By the lamp unit 7A being so tilted, the irradiation direction of light emitted from the light source 12 and irradiated forward via the projection lens 9 is changed, whereby a leveling adjustment is effected.

As described in the above, in the vehicle headlamp of the second exemplary embodiment, the leveling actuator 33A is attached to the frame 16A within the lamp housing 2.

Accordingly, the leveling actuator 33A does not exist in an external side of the lamp housing 2 so that a size of the vehicle headlamp can be reduced.

Since the leveling actuator 33A is detachably mounted on the frame 16A, should the leveling actuator 33A fail in any way, the leveling actuator 33A only has to be detached from the frame 16A only in the interior of the lamp housing 2 so as to cancel the connection of the drive shaft 35 with the lamp unit 7, thereby a maintainability is improved.

In addition, the fulcrum connecting parts 8d, 8d are respectively provided on the both right and left side surfaces of the lens holder 8A, so that a portion to be a rotational fulcrum is not positioned in an upper end side of the lamp unit 7A and an upper end side of the frame 16A. Thus, an upper surface portion of the lamp housing 2 can be disposed closely to an upper surface of the lamp unit 7A, so that a size of the vehicle headlamp in the up-down direction can be reduced.

Moreover, the upward opening substantially U-shaped connecting protrusion 40 is provided in the frame 16A and the support portions 45, 45 are provided on the upper end side of the connecting protrusion 40, so that a space is generated in an upper side of the support portions 45, 45. As a result, a structure disposed in the lamp chamber 5 becomes smaller in the up-down direction, so that the size of the vehicle headlamp in the up-down direction can be reduced.

Furthermore, since the fulcrum connecting parts 8d, 8d of the lamp unit 7A are supported to the support portions 45, 45 of the frame 16A through the screw members 300, 300 so as to be rotatable, it becomes easy to support the fulcrum connecting parts 8d, 8d to the support portions 45, 45.

The configurations and constructions of the constituent portions, which are illustrated in the above exemplary embodiment constitutes specific example in carrying out the invention. Therefore, a scope of the invention should not in any way be construed in a limited fashion.

In accordance with the embodiment of the invention, a vehicle headlamp is provided with: a frame 16, 16A disposed in a lamp chamber 5, the lamp chamber being defined by a lamp housing 2, which has an opening, and a cover 3 adapted to close the opening, wherein the frame includes an aiming fulcrum portion 18a, 42a and two aiming working portions 19a, 18b, 43a, 42b and wherein the frame is adapted to be tiltable around the aiming fulcrum portion (18a, 42a) in a horizontal plane and a vertical plane relative to the lamp housing 2 by actions applied to the aiming working portions 19a, 18b, 43a, 42b; a leveling actuator 33, 33A attached to the frame 16, 16A and including a drive shaft 35, 35A movable in its axial direction; a lamp unit 7, 7A including a light source 12, a shaft connecting portion 15, 46, and a fulcrum connecting portion 14, 8d, wherein the lamp unit 7, 7A is supported on the frame 16, 16A so as to be tiltable around the fulcrum connecting portion 14, 8d in the vertical plane, and wherein the shaft connecting portion 15, 46 is connected to the drive shaft 35, 35A.

In the above structure, since the leveling actuator is not positioned on an external side of the lamp housing, a size of the vehicle headlamp can be reduced.

In the above structure, the leveling actuator 33 may be detachably attached to the frame 16. If the leveling actuator is detachably mounted on the frame, when a failure is caused in the leveling actuator, the leveling actuator may only have to be detached from the frame to cancel the connection of the drive shaft with the shaft connecting portion only in an interior of the lamp housing, thereby a maintainability is improved.

In the above structure, a center of gravity G of the lamp unit 7 may be positioned on a line passing the fulcrum connecting portion 14 and the shaft connecting portion 15 or in a vicinity of said line. If the center of gravity of the lamp unit is positioned on said line passing the fulcrum connecting portion and the shaft connecting portion or in the vicinity thereof, an improvement in vibration resistance can be realized.

In the above structure, a support portion 20 extending in a horizontal direction and including a circumferential surface may be provided at an upper end portion of the frame 16, the fulcrum connecting portion 14 may be supported on the support portion 20, and the fulcrum connecting portion 14 may slide on the circumferential surface. Consequently, the lamp unit is supported on the frame only by being hung on the frame, thereby a workability in assembling the lamp unit onto the frame can be improved.

In the above structure, a shade 10 adopted to cut off a part of light emitted from the light source 12 may be provided on the lamp unit 7, and the fulcrum connecting portion 14, the shaft connecting portion 15, and the shade 10 are integrated into a single member. According to this structure, the number of constituent components can be reduced.

In the above structure, a supported projecting portion 22 may be provided on the frame 16, a load bearing portion 36 may be provided on the lamp housing 2, the supported projecting portion 22 may be slidably supported by the load bearing portion 36, and the load bearing portion 36 may bear loads of the frame 16 and the lamp unit 7. According to this structure, a positioning of the frame and the lamp unit in the lamp chamber can be stabilized so that the frame and the lamp unit are made difficult to be affected by vibrations generated while the vehicle is running, thereby making it possible to realize an improvement in resistance to vibrations.

In the above structure, the lamp unit 7A includes a lens holder 8A and a projection lens 9 attached to the lens holder 8A and adopted to project light emitted from the light source 12. The fulcrum connecting portion includes two fulcrum connecting parts 8d, 8d respectively provided on right and left side surface of the lens holder 8A. According to this structure, a portion to be a rotational fulcrum is not positioned in an upper end side of the lamp unit 7A and an upper end side of the frame 16A. Thus, an upper surface portion of the lamp housing 2 can be disposed closely to an upper surface of the lamp unit 7A, so that a size of the vehicle headlamp in the up-down direction can be reduced.

In the above structure, an upward opened U-shape connecting protrusion 40 is formed in the frame 16A, and support portions 45, 45 for rotatably supporting the fulcrum connecting parts 8d, 8d are formed on an upper end side of the connecting protrusion 40. According to this structure, a space is generated in an upper side of the support portions 45, 45. As a result, a structure disposed in the lamp chamber 5 becomes smaller in the up-down direction, so that the size of the vehicle headlamp in the up-down direction can be reduced.

In the above structure, the fulcrum connecting parts 8d, 8d may be supported on the support portions 45, 45 by screw members 300, 300. According to this structure, it becomes easy to support the fulcrum connecting parts 8d, 8d to the support portions 45, 45.

### [Description of Reference Numerals]

1 vehicle headlamp; 2 lamp housing; 3 cover; 5 lamp chamber; 7 lamp unit; 10 shade; 12 light source; 14 fulcrum connecting portion; 15 shaft connecting portion; 16 frame; 20 support portion; 22 supported projecting portion; 33 leveling actuator; 34 drive control unit; 35 drive shaft; 36 load holding portion;
7A lamp unit; 8A lens holder; 8d fulcrum connecting portion (fulcrum connecting part); 16A frame; 33A leveling actuator; 35A drive shaft; 40 connecting protrusion; 44 supported projecting portion; 45 sipport portion; 300 screw member.

## Claims

1. A vehicle headlamp comprising:
a frame (16A) disposed in a lamp chamber (5), the lamp chamber being defined by a lamp housing (2), which has an opening, and a cover (3) adapted to close the opening, wherein the frame includes an aiming fulcrum portion (42a) and two aiming working portions (43a, 42b), and wherein the frame is adapted to be tiltable around the aiming fulcrum portion (42a) in a horizontal plane and a vertical plane relative to the lamp housing (2) by actions applied to the aiming working portions (43a, 42b);
a leveling actuator (33A) attached to the frame (16A) and including a drive shaft ( 35A) movable in its axial direction; and
a lamp unit (7A) including a light source (12), a shaft connecting portion (46), and a fulcrum connecting portion (8d), wherein the lamp unit (7A) is supported on the frame (16A) so as to be tiltable around the fulcrum connecting portion (8d) in the vertical plane, and wherein the shaft connecting portion (46) is connected to the drive shaft (35A).
**characterized in that**
the lamp unit (7A) includes a lens holder (8A) and a projection lens (9) attached to the lens holder (8A) and adopted to project light emitted from the light source (12),
the fulcrum connecting portion includes two fulcrum connecting parts (8d, 8d) respectively provided on right and left side surface of the lens holder (8A),
an upward opened substantially U-shape connecting protrusion (40) is formed in the frame 16A),
support portions (45, 45) for rotatably supporting the fulcrum connecting parts (8d, 8d) are formed on an upper end side of the connecting protrusion (40), and
support grooves (45a, 45a) respectively opening in an upper side are formed in the support portions (45, 45), wherein the lamp unit (7A) is supported on the frame (16A) by inserting the fulcrum connecting parts (8d, 8d) of the lens holder (8A) in the support grooves (45a, 45a) of the support portions (45, 45) from the upper side.

2. The vehicle headlamp according to claim 1, wherein the fulcrum connecting parts (8d, 8d) are supported on the support portions (45, 45) by screw members (300, 300).

3. The vehicle headlamp according to claim 1 or 2, wherein the leveling actuator (33A) further includes a drive control unit (34) detachably attached to the frame (16A), and wherein the drive shaft (35A) projects from the drive control unit (34) and is driven to move in said axial direction of the drive shaft (35A) by a driving force of the drive control unit (34).

4. The vehicle headlamp according to any one of claims 1 to 3, wherein the leveling actuator (33A) is fixed to the frame (16A) by a screw (200), and the leveling actuator (33A) is detachable from the frame (16A) by untightening the screw (200).

## Patentansprüche

1. Fahrzeugscheinwerfer, der umfasst:
einen Rahmen (16A), der in einer Lampenkammer (5) angeordnet ist, wobei die Lampenkammer durch ein Lampengehäuse (2), das eine Öffnung hat, und eine Abdeckung (3) gebildet wird, die so eingerichtet ist, dass sie die Öffnung verschließt, der Rahmen einen Einstell-Drehpunktabschnitt (42a) und zwei Einstell-Funktionsabschnitte (43a, 42b) enthält und der Rahmen so eingerichtet ist, dass er durch auf die Einstell-Funktionsabschnitte (43a, 42b) wirkenden Bewegungen in einer horizontalen Ebene und einer vertikalen Ebene relativ zu dem Lampengehäuse (2) um den Einstell-Drehpunktabschnitt (42a) herum geschwenkt werden kann;
ein Ausricht-Stellglied (33A), das an dem Rahmen (16A) angebracht ist und einen Verstellschaft (35A) enthält, der in seiner axialen Richtung bewegt kann; und
eine Lampeneinheit (7A), die eine Lichtquelle (12), einen Schaft-Verbindungsabschnitt (46) und einen Drehpunkt-Verbindungsabschnitt (8d) enthält, wobei die Lampeneinheit (7A) an dem Rahmen (16A) so gelagert ist, dass sie um den Drehpunkt-Verbindungsabschnitt (8d) herum in der vertikalen Ebene geschwenkt werden kann, und der Schaft-Verbindungsabschnitt (46) mit dem Verstellschaft (35A) verbunden ist,
**dadurch gekennzeichnet, dass**
die Lampeneinheit (7A) einen Linsenhalter (8A) und eine Projektionslinse (9) enthält, die an dem Linsenhalter (8A) angebracht und so eingerichtet ist, dass sie von der Lichtquelle (12) emittiertes Licht projiziert,
der Drehpunkt-Verbindungsabschnitt zwei Drehpunkt-Verbindungsteile (8d, 8d) enthält, die an der rechten bzw. linken Seitenfläche des Linsenhalters (8A) vorhanden sind,
ein nach oben offener, im Wesentlichen U-förmiger Verbindungsvorsprung (40) in dem Rahmen (16A) ausgebildet ist,
Lagerungsabschnitte (45, 45) zum drehbaren Lagern der Drehpunkt-Verbindungsteile (8d, 8d) an einer oberen Endseite des Verbindungsvorsprungs (40) ausgebildet sind, und
Lagerungsnuten (45a, 45a), die sich jeweils in einer Oberseite öffnen, in den Lagerungsabschnitten (45, 45) ausgebildet sind und die Lampeneinheit (7A) an dem Rahmen (16A) gelagert wird, indem die Drehpunkt-Verbindungsteile (8d, 8d) des Linsenhalters (8A) in die Lagerungsnuten (45a, 45a) der Lagerungsabschnitte (45, 45) von der Oberseite her eingeführt werden.

2. Fahrzeugscheinwerfer nach Anspruch 1, wobei die Drehpunkt-Verbindungsteile (8d, 8d) mit Schraubenelementen (300, 300) an den Lagerungsabschnitten (45, 45) gelagert werden.

3. Fahrzeugscheinwerfer nach Anspruch 1 oder 2, wobei das Ausricht-Stellglied (33A) des Weiteren eine Verstell-Steuereinheit (34) enthält, die abnehmbar an dem Rahmen (16A) angebracht ist, und der Verstellschaft (35A) von der Verstell-Steuereinheit (34) vorsteht und durch eine Verstellkraft der Verstell-Steuereinheit (34) so verstellt wird, dass er sich in der axialen Richtung des Verstellschaftes (35A) bewegt.

4. Fahrzeugscheinwerfer nach einem der Ansprüche 1 bis 3, wobei das Ausricht-Stellglied (33A) mit einer Schraube (200) an dem Rahmen (16A) befestigt ist und das Ausricht-Stellglied (33A) durch Lösen der Schraube (200) von dem Rahmen (16A) abgenommen werden kann.

## Revendications

1. Phare de véhicule comprenant :
un cadre (16A) disposé dans un boîtier de phare (5), le boîtier de phare étant défini par un logement de lampe (2), qui comporte une ouverture, et un couvercle (3) adapté pour fermer l'ouverture, dans lequel le cadre inclut une partie de pivot d'orientation (42a) et deux parties d'actionnement d'orientation (43a, 42b), et dans lequel le cadre est adapté pour pouvoir être incliné autour de la partie de pivot d'orientation (42a) dans un plan horizontal et un plan vertical par rapport au logement de lampe (2) par des actions appliquées aux parties d'actionnement d'orientation (43a, 42b) ;
un actionneur de mise à niveau (33A) fixé sur le cadre (16A) et incluant un axe d'entraînement (35A) mobile dans sa direction axiale ; et
une unité de lampe (7A) incluant une source lumineuse (12), une partie de connexion d'axe (46), et une partie de connexion de pivot (8d), dans lequel l'unité de lampe (7A) est supportée sur le cadre (16A) de façon à pouvoir être inclinée autour de la partie de connexion de pivot (8d) dans le plan vertical, et dans lequel la partie de connexion d'axe (46) est connectée à l'axe d'entraînement (35A),
**caractérisé en ce que**
l'unité de lampe (7A) inclut un support de lentille (8A) et une lentille de projection (9) fixée sur le support de lentille (8A) et adoptée pour projeter la lumière émise depuis la source lumineuse (12),
la partie de connexion de pivot inclut deux parties de connexion de pivot (8d, 8d) placées respectivement sur la surface droite et la surface gauche du support de lentille (8A),
une saillie de connexion sensiblement en forme de U ouverte vers le haut (40) est formée dans le cadre (16A),
des parties de support (45, 45) pour supporter à rotation les parties de connexion de pivot (8d, 8d) sont formées sur un côté d'extrémité supérieure de la saillie de connexion (40), et
des rainures de support (45a, 45a) s'ouvrant respectivement dans un côté supérieur sont formées dans les parties de support (45, 45), dans lequel l'unité de lampe (7A) est supportée sur le cadre (16A) en insérant les parties de connexion de pivot (8d, 8d) du support de lentille (8A) dans les rainures de support (45a, 45a) des parties de support (45, 45) depuis le côté supérieur.

2. Phare de véhicule selon la revendication 1, dans lequel les parties de connexion de pivot (8d, 8d) sont supportées sur les parties de support (45, 45) par des éléments de vis (300, 300).

3. Phare de véhicule selon la revendication 1 ou 2, dans lequel l'actionneur de mise à niveau (33A) inclut en outre une unité de commande d'entraînement (34) fixée de manière amovible sur le cadre (16A), et dans lequel l'axe d'entraînement (35A) fait saillie depuis l'unité de commande d'entraînement (34) et est entraîné pour se déplacer dans ladite direction axiale de l'axe d'entraînement (35A) par une force d'entraînement de l'unité de commande d'entraînement (34).

4. Phare de véhicule selon l'une quelconque des revendications 1 à 3, dans lequel l'actionneur de mise à niveau (33A) est fixé sur le cadre (16A) par une vis (200), et l'actionneur de mise à niveau (33A) peut être détaché du cadre (16A) en desserrant la vis (200).
